# EUROPÄISCHE PATENTANMELDUNG

(11) **EP 4 821 759 A1**
(43) Veröffentlichungstag der Anmeldung: **14.10.2026**
(21) Anmeldenummer: 26163464.6
(22) Anmeldetag: 10.03.2026
(51) Int. Cl.: B60P 3/39

(54) **FREITRAGENDES KLAPPBETTSYSTEM**

(30) Priorität: 03.04.2025 DE 102025113049
(71) Anmelder: Capron GmbH, 01844 Neustadt in Sachsen (DE)
(72) Erfinder: Wingart, Rainer, 88339 Bad Waldsee (DE); Bettzieche, Jan, 88239 Wangen (DE)
(74) Vertreter: Müller Schupfner & Partner Patent- und Rechtsanwaltspartnerschaft mbB (Muc)

(57) **Zusammenfassung**

Die vorliegende Erfindung betrifft ein Klappbettsystem (10) zum Einsatz in einem Fahrzeug, insbesondere einem Freizeitfahrzeug, und ein Fahrzeug, wobei das Klappbettsystem (10) ein Klappbett (1) und ein Befestigungssystem umfasst, mit dem das Klappbett (1) an einer Wand des Fahrzeugs klappbar festlegbar ist, wobei das Klappbett (1) von einem hochgeklappten Zustand (A) in einen ausgeklappten Zustand (B) bringbar ist, wobei das Befestigungssystem zumindest eine Haltestrebe (62) umfasst, welche an ihrem einen Ende an einem ersten Befestigungspunkt (64A) festlegbar ist, der im ausgeklappten Zustand oberhalb des Klappbetts (1) an der Wand des Fahrzeugs angeordnet ist und an ihrem anderen Ende an einem zweiten Befestigungspunkt (64B) an einer ersten Seite des Klappbetts befestigt ist, und wobei im ausgeklappten Zustand (B) das Klappbett (1) an einer zweiten Seite (12) an der Wand formschlüssig festgelegt ist und durch die Haltestrebe (62) gehalten wird.

## Beschreibung

Die vorliegende Erfindung betrifft ein ausklappbares Klappbettsystem und ein Fahrzeug, bevorzugt ein Freizeitfahrzeug, in dem das entsprechende Klappbettsystem verbaut ist.

Aus dem Stand der Technik sind platzsparende Bettsysteme wie Schrankbetten, Schlafsofas und Hubbetten für Freizeitfahrzeuge und/oder flächenmäßig begrenzte Wohnräume bekannt, die oftmals einen hohen Umbauaufwand erfordern und/oder durch eine zusätzliche Stütze abgestützt werden müssen. Letzteres hat insbesondere den Nachteil, dass die entsprechenden Betten im ausgeklappten Zustand vermehrt Raum beanspruchen und der Raum unterhalb des Bettes nur beschränkt nutzbar ist, beispielsweise als Verstauraum. Hubbetten weisen zudem den Nachteil auf, dass die Raumhöhe unter dem hochgefahrenen Bett begrenzt ist. Ferner sind viele aufwendig konstruierte Bettsysteme wie Hub- und Schrankbetten kostenintensiv sowohl in der Konstruktion als auch in der Montage.

Die DE 10 2021 131 502 A1 betrifft ein Freizeitfahrzeug mit einem Klappbett, welches in einer verstauten Stellung senkrecht an einer Fahrzeugwand angeordnet ist. In der Nutzstellung ist ein Rahmen des Klappbettes auf einem Stützelement angeordnet, welches sich wiederum auf dem Boden des Freizeitfahrzeuges abstützt. Das Bett ist nicht freitragend.

Die DE 10 2021 122 178 A1 betrifft ein Freizeitfahrzeug mit einem Klappbett, dessen zweidimensionale Konturlinie zumindest teilweise an die Konturlinie der Karosserie des Freizeitfahrzeuges angepasst ist. Das Klappbett kann um eine Achse an der Unterseite in die waagerechte Nutzstellung geklappt werden und stützt sich in dem Nutzzustand an einem Tisch ab.

Die DE 20 2011 003 731 U1 betrifft ein Wohnmobil mit einer Sitzgruppe, einer Schlafgelegenheit und einer Heckgarage. Die Schlafgelegenheit ist zumindest teilweise über der Heckgarage angeordnet. Sie kann als Klappbett ausgebildet sein, wobei der klappbare Teil in der Nutzstellung teilweise über einer Sitzgruppe angeordnet ist. Das Bett weist einen klappbaren Teil und einen feststehenden Teil auf.

Die DE 37 38 486 A1 offenbart ein Klappbett für Wohnmobile mit einer Auflage für eine Matratze, die an einer ihrer Schmalseiten scharnierförmig an einer Wand des Wohnmobils befestigt ist. Die Auflage ist aus einer senkrecht an der Wand liegenden Position in eine waagerechte Position ausklappbar und im Übrigen zur Erreichung der für ein Bett benötigten Länge teleskopisch ausziehbar. Für das freie Ende der waagerecht ausgeklappten Auflage sind Stützeinrichtungen vorgesehen.

Daher besteht ein Bedarf an Klappbettsystemen, die möglichst einfach, flexibel und kostengünstig gestaltet sind und sowohl im ausgeklapptem als im hochgeklappten Zustand wenig Raum beanspruchen. Zudem sind Bettsysteme von Vorteil, die auf die individuellen räumlichen Gegebenheiten eines Fahrzeugs oder eines Wohnraums angepasst werden können und mit wenigen Handgriffen umzubauen sind.

Aufgabe der vorliegenden Erfindung ist es daher, ein möglichst unkompliziertes, platzsparendes und kostengünstiges Klappbettsystem bereitzustellen, das insbesondere für den Einsatz in einem Freizeitfahrzeug geeignet ist und so gestaltet ist, dass der Raum unterhalb des Klappbettes effektiv genutzt werden kann.

Diese Aufgabe wird mit einem Klappbettsystem gemäß Anspruch 1 und einem Fahrzeug gemäß Anspruch 11 gelöst.

Erfindungsgemäß ist ein Klappbettsystem zum Einsatz in einem Fahrzeug, insbesondere einem Freizeitfahrzeug, vorgesehen, umfassend ein Klappbett und ein Befestigungssystem, mit dem das Klappbett an einer Wand des Fahrzeugs klappbar festlegbar ist, wobei das Klappbett von einem hochgeklappten Zustand in einen ausgeklappten Zustand bringbar ist, wobei das Befestigungssystem zumindest eine Haltestrebe umfasst, welche an ihrem einen Ende an einem ersten Befestigungspunkt festlegbar ist, der im ausgeklappten Zustand oberhalb des Klappbetts an der Wand des Fahrzeugs angeordnet ist, und an ihrem anderen Ende an einem zweiten Befestigungspunkt an einer ersten Seite des Klappbetts befestigt ist, und wobei im ausgeklappten Zustand das Klappbett an einer zweiten Seite an der Wand formschlüssig festgelegt ist und durch die Haltestrebe gehalten wird. Ein Vorteil der Erfindung liegt darin, dass das Klappbett keine Abstützung nach unten benötigt. Daher kann es im Grundriss an Orten vorgesehen werden, die bisher den eher aufwendigen Hubbetten vorbehalten waren. Ferner kann der Umbau von dem ausgeklappten Zustand in den hochgeklappten Zustand ohne aufwendige Umstände, vorzugsweise manuell, erfolgen. Das Klappbett kann nachts als Schlafmöglichkeit genutzt werden, während es tagsüber im hochgeklappten Zustand eine nahezu uneingeschränkte Nutzung des Wohnraums ermöglicht.

Dazu ist das Klappbett im ausgeklappten Zustand an einer Seite, vorzugsweise an einer der schmalen Seiten bzw. Querseiten, auch Schmalseiten genannt, formschlüssig an einer Wand festgelegt. Beispielsweise liegt es auf einem Vorsprung auf. Alternativ kann das Klappbett auch an einer seiner Längsseiten (langen Seiten) an der Wand festgelegt werden. Welche Ausrichtung des Klappbetts vorteilhafter ist, richtet sich danach, welche Gegebenheiten wie Raumhöhe oder freie Wandfläche das Freizeitfahrzeug oder der Wohnraum aufweist, in dem das Klappbett angebracht werden soll.

Hierbei wird von einem im Wesentlichen quaderförmigen Bett mit vier Seiten (auch Querseiten genannt) sowie einer im ausgeklappten Zustand nach oben gerichteten Liegefläche bzw. Liegeseite und einer im ausgeklappten Zustand unten gerichteten Sichtfläche bzw. Sichtseite ausgegangen. Die Liegeseite und die Sichtseite sind vorzugsweise im Wesentlichen rechteckig, so dass das Klappbett zwei Schmalseiten und zwei Längsseiten hat, wobei die Schmalseiten bei einem Einzelbett typischerweise an einem Kopfende und an einem Fußende des Bettes liegen. Selbstverständlich sind auch Abweichungen von der Quaderform denkbar, insbesondere müssen die Sichtseite und die Liegeseite nicht jeweils rechteckig sein, sondern können z.B. abgerundete Ecken aufweisen oder sich auch zu einer Seite hin verschmälern. Das Klappbett umfasst vorzugsweise einen Bettrahmen, einen Lattenrost und eine Matratze, die als Einheit von dem hochgeklappten in den ausgeklappten Zustand transferiert werden können. Als Sicherungselement sind vorzugsweise zwischen dem Bettrahmen und der Decke Sicherungsnetze anbringbar, die ein Herausfallen beim Schlafen verhindern sollen.

Im hochgeklappten Zustand erstreckt sich das Klappbett im Wesentlichen senkrecht stehend und damit parallel zur Wand, sodass es möglichst wenig Raum in Anspruch nimmt und eng an der Wand anliegt. Zur Sicherung ist das Klappbett in diesem Zustand bevorzugt arretiert, damit sich das Klappbett auch im Fahrbetrieb des Fahrzeugs nicht löst. In einer bevorzugten Ausführungsform steht das Klappbett dann "hochkant", d.h. die zweite Seite ist eine Schmalseite. Es ist jedoch auch möglich und von der Erfindung umfasst, dass die zweite Seite eine Längsseite ist.

Durch manuelle Betätigung kann das Klappbettsystem so ausgeklappt werden, dass sich das Klappbett im Wesentlichen waagerecht erstreckt und damit eine Liegefläche ausbildet. Dazu ist das Klappbett drehbar an zumindest einer Haltestrebe festgelegt, so dass im hochgeklappten Zustand das obere Ende des Klappbetts über eine Schwenkbewegung nach unten gezogen werden kann, bis sich das Klappbett in einem waagerechten Zustand (ausgeklappten Zustand, auch als "Schlafzustand" bezeichnet) befindet. In diesem wird das Klappbett über die zumindest eine Haltestrebe gehalten, so dass kein Abstützen des Klappbetts erforderlich ist und der gesamte Raum unterhalb des ausgeklappten Klappbetts nutzbar ist. Über die Haltestrebe ist das Klappbett drehbar so gelagert, dass die Rotationsachse, um die das Klappbett schwenkbar ist, sich orthogonal zu der Haltestrebe erstreckt. Um ein Überdrehen des Klappbettes im ausgeklappten Zustand zu vermeiden, ist das Klappbett zudem direkt an der Wand, bevorzugt über eine der schmalen Querseiten, formschlüssig festgelegt. Die Festlegung kann z.B. über einen oberen Anschlag erfolgen, die eine Überdrehung des Klappbetts im ausgeklappten Zustand verhindert. Alternativ oder zusätzlich erfolgt die Festlegung vorzugsweise über eine untere Verriegelungsvorrichtung. Mit der Verriegelungsvorrichtung kann das das Klappbett über einen Schnappverschluss in dem ausgeklappten Zustand gehalten und gesichert werden. In bevorzugten Ausführungsformen rastet das Klappbett im waagerechten Zustand an der Wand ein, insbesondere an einer seiner Schmalseiten.

Zur Lagerung des Klappbetts weist die Haltestrebe zwei Befestigungspunkte auf. Der erste Befestigungspunkt ist im ausgeklappten Zustand oberhalb des Klappbetts an der Wand angeordnet. Vorzugsweise befindet sich der obere Befestigungspunkt im hochgeklappten Zustand des Bettes im Wesentlichen auf der Höhe einer der zweiten Seite gegenüberliegenden Seite des Klappbetts. "Im Wesentlichen" bedeutet dabei, dass eine Abweichung von bis zu ±15%, vorzugsweise bis zu ±10 % möglich ist. Diese Befestigungsposition ist insbesondere dadurch vorteilhaft, dass zur Anordnung des Klappbettes im hochgeklappten Zustand lediglich eine Wand in der Größe einer Fläche erforderlich ist, die der Liegefläche des Klappbettes entspricht. Je größer die positive Abweichung bei der Festlegung des ersten Befestigungspunkts ist, d.h. je höher der Befestigungspunkt oberhalb der oberen Querseite des Klappbetts liegt, desto höher ist der Bedarf an Wandfläche im hochgeklappten Zustand. Je größer die negative Abweichung bei der Festlegung des Befestigungssystems ist, d.h. je niedriger der Befestigungspunkt unterhalb der oberen Querseite des Klappbetts liegt, desto geringer ist die Hebelwirkung, mit der die Haltstrebe das Klappbett in der waagerechten Position hält. Dementsprechend sinkt das maximale Grenzgewicht, mit der das Klappbett belastet werden kann, welches in einer bevorzugten Ausführungsform des Klappbetts zwischen 80kg und 120 kg, insbesondere bevorzugt zwischen 90kg und 110 kg beträgt.

Dieses Grenzgewicht wird ferner von der Positionierung des zweiten Befestigungspunkts beeinflusst. Dieser befindet sich an einer ersten Seite. Die erste Seite grenzt vorzugsweise an die zweite Seite an, d.h. wenn die zweite Seite eine Schmalseite ist, ist die erste Seite eine Längsseite. Es ist jedoch auch möglich, dass die erste Seite der zweiten Seite gegenüberliegt. In dieser Konfiguration würde sich die Haltestrebe im ausgeklappten Zustand über dem Bett erstrecken.

In einer bevorzugten Ausführungsform ist der zweite Befestigungspunkt an einer an die zweite Seite angrenzenden Seite angeordnet, vorzugsweise an einer Längsseite. Vorzugsweise ist der zweite Befestigungspunkt im Wesentlichen zentral auf der zweiten Seite positioniert, damit rechts und links von der Rotationsachse, um die das Klappbett schwenkbar gelagert ist, in etwa gleich starke Gewichtskräfte wirken. In anderen Worten sollte der Abstand von dem ersten Befestigungspunkt zu der schmalen Querseite, an der das Klappbett an der Wand formschlüssig festgelegt ist, ungefähr dem Abstand von dem ersten Befestigungspunkt zu der gegenüberliegenden freitragenden Querseite des Klappbettes entsprechen. Damit kann vermieden werden, dass ein Kräfteungleichgewicht bei der Lagerung des Klappbettes zustande kommt, das von der formschlüssigen Festlegung der vorderen Querseite an der Wand kompensiert werden muss. Ferner befindet sich bei einer derartigen zentralen Festlegung des ersten Befestigungspunktes auch der Körperschwerpunkt beim Liegen auf dem Klappbett möglichst nah an der Rotationsachse, so dass bei Nutzung des Klappbetts ebenfalls ein stabilisierender Effekt auftreten kann. Im Wesentlichen bedeutet dabei konkret, dass der zweite Befestigungspunkt entweder in Richtung Wand oder entgegengesetzt in Richtung des distalen Endes des Klappbetts maximal um +/- 25%, vorzugsweise um +/-15% vom Mittelpunkt der ersten Seite des Klappbetts entfernt angeordnet ist, wobei sich die Prozentzahlen auf die Länge der ersten Seite beziehen. Je näher der Befestigungspunkt in Richtung Wand positioniert wird, desto einfacher ist das Klappbett für Personen zugänglich, da die Haltestrebe den Betteinstieg nicht blockiert. Je näher der zweite Befestigungspunkt in Richtung des distalen Endes des Klappbetts positioniert wird, desto mehr wird die Traglast von der Aufhängung an dem distalen Ende des Klappbetts aufgenommen. Somit ist das Klappbett zunehmend weniger einseitig, sondern zweiseitig, gelagert, so dass sich die wirkenden Kräfte gleichmäßiger über die gesamte Bettfläche verteilen. Der Befestigungspunkt kann auch an der ersten Seite verschiebbar vorgesehen sein, z.B. indem er in einer Führungsschiene geführt wird.

In einer Ausführungsform ist das Befestigungssystem so konfiguriert, dass die zweite Seite (insbesondere eine Schmalseite bzw. vordere Querseite) beim Ausklappen des Klappbetts von einer unteren Position, insbesondere an oder in der Nähe des Fahrzeugbodens, in eine obere Position überführbar ist, in der sie an der Wand formschlüssig festgelegt ist. Das Klappbett ist vorzugsweise manuell von dem hochgeklappten in den ausgeklappten Zustand bringbar. Dazu ist die zweite Seite des Klappbetts vorzugsweise an der Wand so formschlüssig festgelegt, dass sie in vertikaler Richtung entlang der Wand verschoben werden kann und drehbar gelagert ist. Insbesondere kann die zweite Seite in einer Führungsschiene gelagert sein, über die sie einfach an der Wand verschoben werden kann. Dabei dreht sich das Klappbett um 90°. Wird die der 2. Seite gegenüberliegende Seite, die sich im hochgeklappten Zustand oben befindet, nach unten gezogen, wird damit die zweite Seite von ihrer unteren Position im hochgeklappten Zustand des Klappbettes in ihre obere Position in den ausgeklappten Zustand des Klappbettes überführt. Bevorzugt befindet sich die untere Position der zweiten Seite dabei in Bodennähe des Fahrzeugs, sodass sich zugleich die obere Position der gegenüberliegenden Seite ungefähr auf einer Höhe zwischen 1,60m und 2,40m, vorzugsweise zwischen 1,80m und 2,20m, befindet. Von dieser Höhe aus ist sie für einen durchschnittlich großen Menschen gut erreichbar, um den Klappmechanismus zu betätigen. Vorteilhaft liegt die zweite Seite im hochgeklappten Zustand nicht auf dem Boden des Fahrzeugs auf, sondern hängt an der bzw. den Haltestreben. Dieser Zustand ist besonders stabil, da ein unbeabsichtigtes Ausklappen des Bettes dadurch aufgrund der Gewichtsverteilung nicht möglich ist. Alternativ kann die zweite Seite sich im hochgeklappten Zustand auf dem Boden des Fahrzeugs abstützen. Ferner ist das Klappbett im hochgeklappten Zustand bevorzugt über eine obere Verriegelungsvorrichtung gesichert, die ein Ausklappen des Klappbettes verhindert.

Zum Ausklappen des Klappbettes ist die obere Verriegelungsvorrichtung über ein Entsicherungselement lösbar, welches bevorzugt als Knopf oder als Pin ausgebildet ist. In einer Ausführungsform kann durch das Herausziehen dieses Entsicherungselements die obere Verriegelungsvorrichtung gelöst und das Klappbett in den ausgeklappten Zustand geschwenkt werden.

In einer Ausführungsform weist das Klappbett eine Liegefläche und eine dieser gegenüberliegende Sichtfläche auf, wobei das Klappbett in dem hochgeklappten Zustand so ausgerichtet ist, dass sich die Sichtfläche parallel zur Wand erstreckt und sichtbar ist, und/oder wobei das Klappbett in dem ausgeklappten Zustand so ausrichtet ist, dass sich die Liegefläche orthogonal zur Wand erstreckt, an der das Klappbett festgelegt ist, und ein der zweiten Seite gegenüberliegendes distales Ende des Klappbetts freitragend ist. Die Funktion des Klappbetts definiert sich im Wesentlichen darüber, dass es im ausgeklappten Zustand eine waagerechte Liegefläche aufweist, die sich zum Hinlegen und/oder Schlafen eignet. In dem hochgeklappten Zustand des Klappbettes, in dem sich die Liegefläche parallel zur Wand erstreckt, ist die Liegefläche so orientiert, dass diese vorzugsweise in Richtung Wand blickend ausgerichtet ist. Damit wird die gegenüberliegende Fläche der Liegefläche, quasi die Bettunterseite, sichtbar. Dies hat den Vorteil, dass die Liegefläche, wenn diese nicht genutzt wird, besser vor Verschmutzungen wie Staub geschützt wird. Ein weiterer Vorteil eines Klappbettes dieser Ausführungsform ist, dass das der zweiten Seite gegenüberliegende distale Ende vorzugsweise freitragend ist und in den Raum hineinragen kann, ohne abgestützt werden zu müssen. Damit kann die Höhe, in der sich die Liegefläche im ausgeklappten Zustand befinden soll, beliebiger ausgewählt werden, da keine zusätzliche Stütze des Bettes von unten erforderlich ist In anderen Worten ist die Raumhöhe unterhalb des Klappbettes nicht limitiert. Insgesamt ist somit das Klappbett individueller auf die räumlichen Gegebenheiten verschiedener Fahrzeuge anpassbar und der Wohnraum dieser, insbesondere der Wohnraum unterhalb des Klappbettes, kann effektiver genutzt werden. Bevorzugt wird das Klappbett auf einer Höhe zwischen 80cm und 160cm, insbesondere bevorzugt zwischen 100cm und 140cm, an der Wand festgelegt. Diese Angaben beziehen sich auf die Sichtfläche (Unterseite) des Klappbetts bzw. dessen Bettrahmen. Durch diese relativ hohe Anordnung ist unterhalb des ausgeklappten Klappbetts noch viel Platz, der z.B. für ein weiteres Bett genutzt werden kann.

In einer Ausführungsform wird die Haltestrebe im ausgeklappten Zustand auf Zug belastet und insbesondere durch ein steifes Element gebildet, z.B. durch ein Metallband, eine Metallprofil oder einen Holzbalken.

Alternativ können ferner faserverstärkte Materialien eingesetzt werden, z.B. faserverstärkter Kunststoff. Steife Elemente weisen insbesondere den Vorteil auf, dass diese den Ausklapp-Mechanismus stabilisieren und eine Verdrehung des Klappbettes verhindern. Die Haltestrebe ist vorzugsweise dazu ausgelegt, das Klappbett von oben zu halten, indem das Klappbett über die Haltestrebe an der Wand festgelegt ist. Der erste, wandseitige Befestigungspunkt kann sich dabei oberhalb des zweiten Befestigungspunktes befinden, der entlang der ersten Seite des Klappbettes festgelegt ist. Mit dieser Art von Aufhängung wird die Haltestrebe bei Belastung des Klappbettes mit Zugkräften beansprucht. Alternativ können als Haltestreben biegsame Elemente wie Seile oder Gurte eingesetzt werden, die effektiv Zugkräfte aufnehmen können. Insbesondere bevorzugt werden in diesem Fall Stahlseile oder -gurte verwendet, da Stahl als Material widerstandsfähig gegenüber Zugbeanspruchung ist, wodurch die Lebensdauer der Haltestreben erhöht werden kann.

In einer Ausführungsform sind der erste Befestigungspunkt und der zweite Befestigungspunkt so positioniert, dass sich die Haltestrebe in dem ausgeklappten Zustand in einem Haltewinkel zwischen 20° und 60°, bevorzugt zwischen 35° und 50°, zu der Liegefläche erstrecken. Damit kann der Haltewinkel ein Maß dafür sein, wie stark einseitig das Klappbett gelagert ist. Bei einer zentralen Positionierung des zweiten Befestigungspunktes bzw. der Rotationsachse auf der ersten Seite des Klappbettes beträgt der Haltewinkel unter der Voraussetzung, dass der erste Befestigungspunkt im hochgeklappten Zustand in Höhe des oberen Endes des Klappbettes positioniert ist, 45 °. In dieser besonders bevorzugten Ausführungsform des Befestigungssystems bzw. erweitert bei einem Haltewinkel zwischen 35° und 50° wird die Haupttraglast von der zumindest einen Haltestrebe getragen und die formschlüssige Festlegung des Klappbettes stellt lediglich eine Verdrehsicherung dar. Damit ist eine hohe Stabilität des Klappbettes gegeben und zugleich wird die formschlüssige Festlegung an der Wand gegen Überlastung geschützt, so dass sich dessen Lebensdauer erhöht. Bei größeren Haltewinkeln über 50° ist das Klappbett zunehmend einseitig gelagert und die Traglast wird zunehmend auf die wandseitige Festlegung verlagert. Bei kleineren Haltewinkeln unter 35° ist das Klappbett zunehmend an dem der Wandbefestigung gegenüberliegenden distalen Ende des Klappbettes gelagert, so dass auch in dieser Ausführungsform die Traglast der wandseitigen Festlegung zunimmt. Vorteilhaft ist jedoch anzusehen, dass durch die mit abnehmenden Haltewinkel zunehmende zweiseitige Festlegung des Klappbettes die Kräftebeanspruchung gleichmäßiger verteilt wird.

In einer Ausführungsform umfasst das Klappbettsystem zwei Haltestreben, wobei sich die beiden Haltestreben parallel zueinander erstrecken. Um eine Verdrehung um die erste Seite des Klappbettes zu verhindern, wird das Klappbett bevorzugt von zwei Haltestreben gehalten, die jeweils auf einer ersten Seite und einer der ersten Seite gegenüberliegenden Seite, vorzugsweise zwei Längsseiten des Klappbettes symmetrisch festgelegt sind. Dabei wird die Zuglast auf beide Haltestreben gleichmäßig verteilt, so dass die einzelne Haltestrebe weniger belastet ist. Ferner erhöht sich durch die Lagerung des Klappbettes über die beiden ersten Seiten die Stabilität des gesamten Klappbettsystems.

In einer Ausführungsform weist das Befestigungssystem einen wandseitigen Befestigungsabschnitt auf, der an der Wand festgelegt ist, wobei das Klappbett zumindest einen bettseitigen Befestigungsabschnitt aufweist, der an der zweiten Seite festgelegt ist, wobei der zumindest eine bettseitige Befestigungsabschnitt ein Führungselement umfasst, das insbesondere als Vorsprung ausgebildet ist, wobei der zumindest eine wandseitige Befestigungsabschnitt als Führungsschiene ausgebildet ist, die zumindest im Wesentlichen vertikal ausgerichtet ist, wobei das Führungselement dazu ausgelegt ist, in der Führungsschiene zu gleiten und dadurch das Klappbett schwenkbar und vertikal verschiebbar zu lagern. Die Kernaufgabe der formschlüssig ineinandergreifenden Befestigungsabschnitte ist es, die frei drehbare Lagerung des Klappbettes, welche durch die Haltestrebe gegeben ist, einzuschränken und gegen eine Überdrehung abzusichern, indem das Klappbett über die gegebene Eingriffsgeometrie direkt an der Wand festgelegt wird. Vorzugsweise ist auf beiden Seiten der zweiten Seite jeweils ein wandseitiger Befestigungsabschnitt und ein bettseitige Befestigungsabschnitt vorgesehen, so dass das Klappbett sicher in den beiden Führungsschiene geführt werden kann.

In einer besonders bevorzugten Ausführungsform ist der wandseitige Befestigungsabschnitt als Führungsschiene ausgebildet, die sich zumindest im Wesentlichen vertikal entlang der Wand erstreckt. Diese Führungsschiene kann als Rücksprung ausgebildet sein. Der bettseitige Befestigungsabschnitt weist dementsprechend ein Führungselement auf, das insbesondere bevorzugt als Vorsprung ausgebildet ist. Dieser ist dazu ausgelegt, einen Formschluss mit der Führungsschiene zu bilden, in der Führungsschiene beim Aus- oder Hochklappen des Klappbettes zu gleiten und um die zweite Seite des Klappbettes geschwenkt zu werden. Die Führungsschiene kann ein C-förmiges Profil aufweisen, in diesem der Vorsprung gleitet. Dabei ist der Vorsprung vorzugsweise als Rolle ausgebildet, wodurch ein besonders reibungsfreies Gleiten möglich ist. In anderen Worten ist das Klappbett durch die gegebene Eingriffsgeometrie an der Wand und an der zweiten Seite des Klappbettes in der Führungsschiene vertikal an der Wand verschiebbar und um die zweite Seite rotierbar festgelegt, so dass das Klappbett von dem hochgeklappten in den ausgeklappten Zustand bzw. umgekehrt von dem ausgeklappten in den hochgeklappten Zustand transferiert werden kann. Ferner ist Klappbett über die Führungsschiene gegen axiale Verschiebungen außerhalb der vertikalen Richtung gesichert.

Die Führungsschiene kann ferner zumindest einen Anschlag zur Begrenzung der vertikalen Verschiebung bei der Zustandsänderung des Klappbettes aufweisen. Vorzugsweise begrenzt ein oberer Anschlag die Verschiebung der Querseite beim Ausklappen des Klappbettes. Dabei wird die Querseite beim Hochgleiten in der Führungsschiene an dem oberen Anschlag blockiert, sobald das Klappbett eine waagerechte Position erreicht hat. Ferner kann ein unterer Anschlag die Verschiebung der an der Wand festgelegten Querseite des Klappbettes beim Hochklappen des Klappbettes begrenzen. Dabei wird die zweite Seite beim Heruntergleiten in der Führungsschiene an dem unteren Anschlag der Führungsschiene blockiert, sobald das Klappbett parallel zur Wand steht.

In einer Ausführungsform weist der zumindest eine wandseitige Befestigungsabschnitt am oberen Ende eine Einrastfunktion auf, die dazu ausgelegt ist, das Klappbett im ausgeklappten Zustand gegen eine axiale Verschiebung entlang der Vertikalachse und/oder einer Verdrehung zu sichern. Der als Führungsschiene ausgebildete wandseitige Befestigungsabschnitt kann an dem oberen Ende einen oberen Anschlag zur Begrenzung der vertikalen Verschiebung der zweiten Seite des Klappbettes beim Ausklappen aufweisen. Wenn das Klappbett eine waagerechte Position erreicht, kann es somit an einer Überdrehung gehindert werden. In dieser Position kann das Klappbett über eine Einrastfunktion arretiert werden, die eine vertikale Verschiebung nach unten oder eine Verdrehung des Klappbettes bei asymmetrischer Belastung verhindert und das Klappbett in der waagerechten Position fixiert. Die Einrastfunktion erfolgt dabei vorzugsweise zwei-stufig über eine Verriegelungsvorrichtung mit einem federgespannten Schnappverschluss und als Backup-Option über einen zusätzlich sichernden Haltegurt.

In einer Ausführungsform umfasst die Wand zwei sich gegenüberstehende Rahmenelemente, wobei jeweils ein wandseitiger Befestigungsabschnitt an den beiden Rahmenelementen festgelegt ist, wobei das Klappbettes zwei gegenüberliegende bettseitige Befestigungsabschnitte aufweist, die formschlüssig an den beiden wandseitigen Befestigungsabschnitten zwischen den Rahmenelementen festgelegt sind. Zur Erhöhung der Stabilität kann das Klappbett in einer besonders bevorzugten Ausführungsform über zwei Befestigungsabschnitte an der Wand formschlüssig festgelegt werden. Dazu kann die Wand vorzugsweise um zwei sich gegenüberstehende Rahmenelement, die jeweils orthogonal zur Wand ausgerichtet sind, erweitert werden. Die sich gegenüberstehenden Wandabschnitte können jeweils einen sich vertikal erstrecken wandseitigen Befestigungsabschnitt aufweisen. Dementsprechend befinden sich die vorzugsweise als Vorsprung ausgebildeten bettseitigen Befestigungsabschnitt nicht direkt an der schmalen zweiten Seite des Klappbettes, sondern im vorderen Bereich der ersten Seiten, so dass diese formschlüssig in die Führungsschienen der Rahmenelemente greifen können. In anderen Worten ist die Wand, an der das Klappbett festgelegt wird, nicht in Richtung der schmalen Querseite des Klappbettes ausgerichtet, sondern in Richtung der ersten Seiten. Dazu sind die entsprechenden Rahmenelement so voneinander beabstandet, dass das vordere schmale Ende des Klappbettes zwischen ihnen positioniert werden kann und die bettseitigen Befestigungsabschnitt in die wandseitigen Eingriffsgeometrie greifen können. Diese doppelseitige Festlegung des Klappbettes weist den Vorteil auf, dass die Beanspruchung gleichmäßig auf zwei Abschnitte verteilt wird, sodass das Befestigungssystem insgesamt stabiler und langlebiger ausgestaltet ist.

In einer Ausführungsform ist das Klappbett dazu ausgelegt ist, als Einzelbett eingesetzt zu werden. Dabei weist das Klappbettsystem eine Gewichtsbegrenzung von zwischen 80 und 120 kg, bevorzugt zwischen 90kg und 110kg auf. Die Liegefläche kann von einer Längslänge, die der Länge der Längsseite entspricht, und einer Querlänge, die der Länge der Querseite entspricht, definiert werden. In der Funktion als Einzelbett kann das Klappbett von Kindern und Erwachsenen genutzt werden. Dabei steht die Querlänge bevorzugt in einem Verhältnis von 0,35 und 0,6 zu der Längslänge des Klappbettes. Standardgemäß weisen Betten eine Länge von ungefähr 2 m, beispielsweise von 190cm bis 210cm, auf. Dementsprechend können Einzelbetten dieser Ausführungsform eine Querlänge zwischen 70cm und 120 cm aufweisen. Alternativ kann das Klappbettsystem als Doppelbett ausgebildet sein. In diesem Fall steht die Querlänge bevorzugt in einem Verhältnis von 0,45 und 1 zu der Längslänge des Klappbettes. Dementsprechend kann ein Doppelbett eine Querlänge zwischen 90 cm und 200 cm aufweisen. Aufgrund der Gewichtsbeschränkung von 80 bis 120 kg ist das Klappbett in dieser Doppelbettausführung bevorzugt für Kinder und/oder leichtere Erwachsene geeignet. Alternativ kann das Klappbett in einer Doppelbettausführung auch für ein höheres Maximalgewicht von z.B. 160kg bis 240kg, bevorzugt 180kg bis 220kg, ausgelegt sein. In einer anderen Ausführungsform kann das Klappbett auch als Kinderbett mit einer Länge zwischen 140cm und 180cm ausgelegt sein. In dieser Größe kann es auch in kleine Fahrzeuge integriert werden.

Gemäß einem weiteren Aspekt der Erfindung ist ein Fahrzeug umfassend ein hier beschriebenes Klappbettsystem vorgesehen. Das Fahrzeug kann insbesondere ein Wohnwagen oder ein Reisemobil oder Camper-Van sein. Vorzugsweise ist das Fahrzeug ein Reisemobil.

Vorzugsweise ist das Klappbett derart montiert, dass es im ausgeklappten Zustand oberhalb einer Dinette bzw. einer Sitzgruppe, insbesondere umfassend eine Sitzbank und einen Tisch, oder gegenüberliegende Sitzbänke und einen Tisch, angeordnet ist. Aufgrund der freitragenden Ausführungsform des Klappbettes, ist keine zusätzliche Abstützung des frei in den Raum ragenden distalen Endes des Klappbettsystems erforderlich. Damit kann der Raum unterhalb des Klappbettes sowohl im ausgeklappten als auch im hochgeklappten Zustand nahezu uneingeschränkt genutzt werden. In einer besonders bevorzugten Ausführungsform wird das Klappbettsystem oberhalb einer Sitzgruppe angeordnet. In einer bevorzugten Ausführungsform kann die Sitzgruppe zu einem Bett umgebaut werden. Beispielsweise kann der Tisch weggeklappt oder abgesenkt werden und auf der Höhe der Sitzfläche der Sitzbank/Sitzbänke ein Matratzenelement aufgebaut werden, so dass der Platz unter dem ausgeklappten Klappbett zu einem zweiten Bett umgebaut wird. Damit kann der Raum unterhalb des Klappbettes als zweite Schlafgelegenheit genutzt werden, während parallel das Klappbett in seiner Funktion vollumfänglich zur Verfügung steht, wodurch eine besonders raumsparende Etagenbett-Funktion gegeben ist. Die Sitzgruppe ist bevorzugt im vorderen Teil der Fahrzeugs, direkt hinter dem Fahrer- oder Beifahrersitz, angeordnet.

In einer Ausführungsform ist die Sichtfläche des Klappbettes im hochgeklappten Zustand als Rückenlehne verwendbar ist. Zum Beispiel kann die Bettunterseite, die bei der zur Wand parallelen Ausrichtung des Klappbettes sichtbar wird, als Rückenlehne für eine Sitzbank genutzt werden.

In einer Ausführungsform ist unterhalb des Klappbetts im ausgeklappten Zustand ein weiteres Bett vorgesehen. Dadurch kann auf einfache Weise ein Stockbett geschaffen werden, wobei das untere Bett tagsüber als Sitzbank oder Sofa genutzt werden kann, was ansonsten bei fest installierten Stockbetten nicht möglich ist. Das untere Bett wird dabei bevorzugt durch eine umgebaute Sitzgruppe gebildet, die tagsüber mit einem aufgeklappten Tisch als Dinette oder Sitzgruppe nutzbar ist. Die Liegefläche des Klappbetts weist im ausgeklappten Zustand bevorzugt einen Abstand zwischen 80cm und 180cm, insbesondere bevorzugt zwischen 100cm und 140cm, vom Boden des Fahrzeugs auf, so dass unterhalb des Klappbettes Raum für ein weiteres Bett und/oder eine Dinette bzw. eine Sitzgruppe ist.

In einer Ausführungsform erstreckt sich das Klappbett im ausgeklappten Zustand in Richtung des distalen Endes quer zur Fahrtrichtung. Bevorzugt ist das Klappbett in Richtung des distalen freitragenden Endes quer zur Fahrtrichtung ausgerichtet, damit dieses nach Möglichkeit im vorderen Teil des Fahrzeugs angeordnet werden kann, um den Wohnraum möglichst effektiv einzuteilen. Alternativ ist auch eine Ausrichtung in Richtung des freitragenden Endes des Klappbettes längs der Fahrtrichtung möglich.

Weitere Vorteile und charakteristische Merkmale der vorliegenden Erfindung ergeben sich aus der nachfolgenden Beschreibung mit Bezug auf die beigefügten Figuren. Gleiche Merkmale werden in den Figuren jeweils mit gleichen Bezugszeichen verwendet, auch wenn sie Teil unterschiedlicher Ausführungsform sind. Es versteht sich dabei, dass einzelne Merkmale, welche nur für eine bestimmte Ausführungsform explizit beschrieben werden, auch in anderen Ausführungsform der Erfindung zum Einsatz gelangen können sollen, sofern sich diese nicht aufgrund technischer Gegebenheiten verbietet.

Es zeigen:
- Fig. 1: eine perspektivische Ansicht eines Klappbettsystems im ausgeklappten Zustand,
- Fig. 2: eine perspektivische Ansicht eines Klappbettsystems beim Hochklappen des Klappbettes,
- Fig. 3: eine perspektivische Ansicht eines Klappbettsystems im hochgeklappten Zustand,
- Fig. 4: eine Detailansicht der Festlegung des Klappbettes an einem Rahmenelement, und
- Fig. 5: eine Detailansicht des Befestigungssystems.

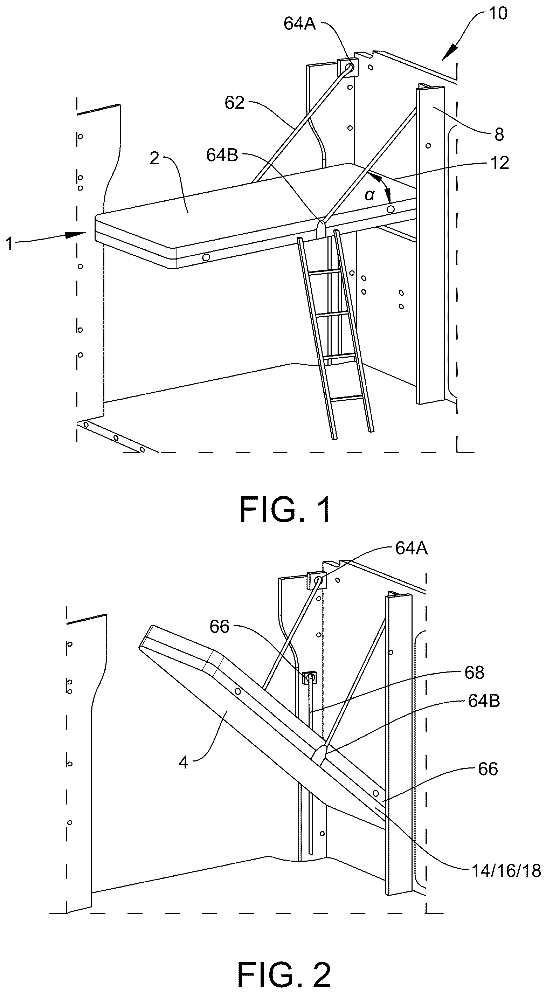

**Figur 1** zeigt eine perspektivische Ansicht eines Klappbettsystems 10 im ausgeklappten Zustand B, wobei das Klappbettsystem ein Klappbett 1 sowie ein Befestigungssystem aufweist. In Figur 1 erstreckt sich das Klappbett 1 in Richtung seines freitragenden distalen Endes orthogonal zur Wand, so dass die Liegefläche 2 waagerecht positioniert ist. Das Klappbett 1 wird von zwei sich parallel zueinander erstreckenden Haltestreben 62 in der waagerechten Position gehalten, wobei die Haltestreben einen ersten Befestigungspunkt 64A oberhalb des Klappbettes an der Wand und einen zweiten Befestigungspunkt 64B an einer ersten Seite, hier einer Längsseite, des Klappbettes 2 aufweisen. Der zweite Befestigungspunkt 64B befindet sich dabei in Richtung des freitragenden distalen Endes des Klappbettes 1 zentral auf dessen Längsseite, so dass die Haltestreben 62 mit der Liegefläche 2 ungefähr einen Haltewinkel *α* von 45° einschließen. Über die Haltestreben 62, die in dem ausgeklappten Zustand B des Klappbettes 1 auf Zug beansprucht werden, ist das Klappbett1 frei drehbar gelagert. Zur Sicherung vor einer Überdrehung und/oder einer vertikalen Verschiebung ist das Klappbett 1 an einer zweiten Seite, hier einer vorderen Schmalseite, formschlüssig an der Wand festgelegt. Dazu weist die Wand zwei benachbart angeordnete, orthogonal zur Wand ausgerichtete Rahmenelemente 8 auf, an denen jeweils ein sich vertikal erstreckender wandseitiger Befestigungsabschnitt 66 festgelegt ist. Dieser ist als Führungsschiene 68 ausgebildet, die einen Rücksprung aufweist. Die Rahmenelemente 8 sind so voneinander beabstandet, dass die vordere Schmalseite 12 des Klappbettes 1 zwischen den beiden Rahmenelement 8 festlegbar ist. Zur Festlegung weisen die vorderen Bereiche der Längsseiten des Klappbettes 1 als Vorsprünge 18 ausgebildete Führungselemente 16 auf, die die bettseitigen Befestigungsabschnitte 14 bilden. Diese sind in mit ihrer hervorstehenden Eingriffsgeometrie zum formschlüssigen Eingriff in die wandseitigen Befestigungsabschnitte 66 ausgelegt.

**Figur 2** zeigt eine perspektivische Ansicht eines Klappbettsystems 10 beim Hochklappen des Klappbettes 1. Der Klappmechanismus basiert darauf, dass das Klappbett 1 an einem ersten Befestigungspunkt 64A an der Wand oberhalb des Klappbettes 1 und an einem zweiten Befestigungspunkt 64B an den Längsseiten des Klappbettes 1 über zwei Haltestreben 62 frei drehbar gelagert ist und an der Wand beim Hochklappen vertikal in einem als Führungsschiene 68 ausgebildeten wandseitigen Befestigungsabschnitt geführt 66 wird. Dabei gleitet der als Vorsprung 18 ausgebildete bettseitige Befestigungsabschnitt 14 an der zweiten Seite 12 des Klappbettes 1 entlang der Führungsschien 68 vertikal nach unten und wird in einer parallelen Bewegung um die zweite Seite 12 herum nach oben geschwenkt. Dabei wird die Bettunterseite, die als Sichtfläche 4 definiert ist, sichtbar. Zur Begrenzung der Schwenkbewegung weist der als Rücksprung ausgebildete wandseitige Befestigungsabschnitt 66 einen oberen und einen unteren Anschlag auf. Erreicht der bettseitige Befestigungsabschnitt 14 beim Hochklappen des Klappbettes den unteren Anschlag, befindet sich das Klappbett 1 in einer Position, in der es sich parallel zur Wand erstreckt. Erreicht der bettseitige Befestigungsabschnitt 14 beim Ausklappen des Klappbettes den oberen Anschlag, befindet sich das Klappbett 1 in einer Position, in der es sich waagerecht zur Wand erstreckt.

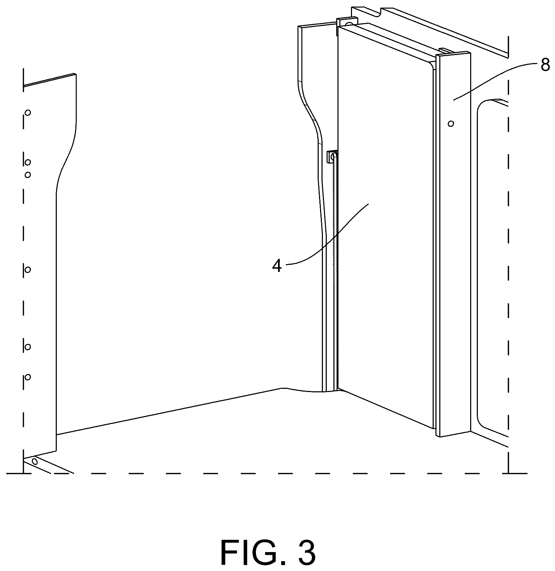

In **Figur 3** ist eine perspektivische Ansicht eines Klappbettsystems 10 im hochgeklappten Zustand A dargestellt. In diesem erstrecken sich das Klappbett 1 und die Haltestreben 62 parallel zur Wand und die Sichtfläche 4 ist sichtbar. Die Längsseiten des Klappbettes sind in dieser Position vollständig von den Rahmenelementen 8 umschlossen. Die Liegefläche 2 ist der Wand zugewandt, so dass sie vor Verschmutzung geschützt ist. In dieser Position ist die Sichtfläche 4 als Rückenlehne nutzbar, wenn das Klappbett 1 oberhalb einer Dinette angeordnet ist.

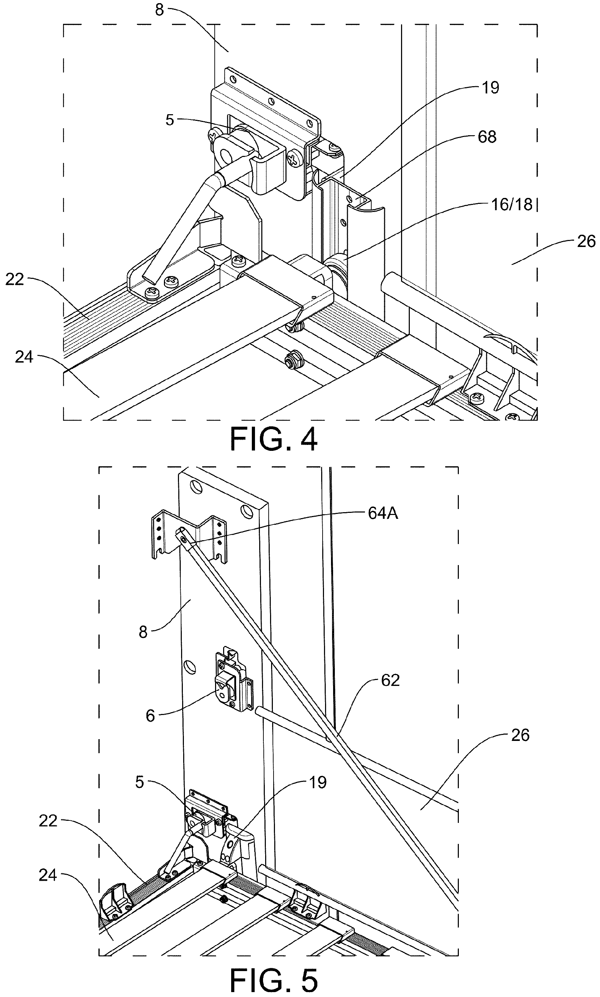

**Figur 4** zeigt eine Detailansicht der Festlegung des Klappbettes 1 an einem Wandelement 8. Das Klappbett 1 besteht in Figur 4 aus einem Bettrahmen 22 und einem Lattenrost 24, die als Einheit im ausgeklappten Zustand B sind, in dem das Klappbettsystem 10 zusätzlich Sicherungsnetze 26 aufweist, die ein Herausfallen beim Schlafen verhindern sollen. Das Klappbett 1 ist über ein als Vorsprung 16 ausgebildetes Führungselement 18 in der Führungsschiene 68, welche an einem Rahmenelement 8 fixiert ist, formschlüssig so festgelegt, dass das Klappbett 1 beim Umschwenken von dem ausgeklappten Zustand B in den hochgeklappten Zustand A oder umgekehrt geführt wird. In Figur 4 ist der Vorsprung 16 als Rolle ausgebildet, so dass ein besonders reibungsfreies Gleiten in der C-förmigen Führungsschiene 68 möglich ist. Ferner ist in der Figur 4 die Verriegelungsvorrichtung zur Arretierung des Klappbettes 1 im ausgeklappten Zustand B, in dem sich der Vorsprung 16 an dem oberen Anschlag der Führungsschiene 68 befindet, erkennbar. Zur Sicherung des Klappbettes 1 im ausgeklappten Zustand B weist die Führungsschiene 68 einen oberen Anschlag 19 auf. Erreicht das Klappbett 1 beim Ausklappen den oberen Anschlag 19, befindet sich dieses in der waagerechten Position und ein weiteres Überdrehen nach oben des Klappbettes ist nicht möglich. Um eine Verschiebung nach unten zu verhindern, wird bei Erreichen des oberen Anschlags 19 die untere Verriegelungsvorrichtung 5 ausgelöst, die das Klappbett 1 mittels eines Schnappverschlusses in der waagerechten Position hält.

**Figur 5** stellt eine Detailansicht des gesamten Befestigungssystems dar. Ähnlich zu Figur 4 weist das Klappbett 1 in Figur 5 einen Bettrahmen 22 und einen Lattenrost 24 auf, wobei sich das Klappbett 1 im ausgeklappten Zustand B befindet. Dementsprechend sind Sicherungsnetze 26 zum Schutz der schlafenden Person an dem Klappbett1 montiert. Zudem ist das Klappbett 1 über den oberen Anschlag 19 und die eingerastete untere Verriegelungsvorrichtung 5 an dem Rahmenelement 8 form- und kraftschlüssig fixiert, so dass das Klappbett 1 gegen eine axiale Verschiebung nach oben oder unten entlang der Führungsschiene 68 gesichert ist. In Figur 5 ist ferner der erste Befestigungspunkt 64A erkennbar, an dem die Haltestrebe 62, über die das Klappbett 1 gehalten wird, an dem Rahmenelement 8 drehbar gelagert festgelegt ist. Zudem weist das Rahmenelement 8 eine obere Verriegelungsvorrichtung 6 auf, die dazu ausgelegt ist, das Klappbett 1 im hochgeklappten Zustand A mittels eines Schnappverschlusses gegen ein Ausklappen zu sichern. Diese Sicherung kann über ein Entsicherungselement, vorzugsweise ausgebildet als Knopf oder als Pin, gelöst werden, so dass das Klappbett 10 wieder in den ausgeklappten Zustand B schwenkbar ist.

### Bezugszeichenliste:

- 1: Klappbett
- 10: Klappbettsystem
- 12: Zweite Seite (Querseite)
- 14: Bettseitiger Befestigungsabschnitt
- 16: Führungselement
- 18: Vorsprung
- 19: oberer Anschlag
- 2: Liegefläche
- 22: Bettrahmen
- 24: Lattenrost
- 26: Sicherheitsnetz
- 4: Sichtfläche
- 5: untere Verriegelungsvorrichtung
- 6: obere Verriegelungsvorrichtung
- 62: Haltestrebe
- 64A/64B: Erste und zweite Befestigungspunkte
- 66: Wandseitiger Befestigungsabschnitt
- 68: Führungsschiene
- 8: Rahmenelemente
- A: Hochgeklappter Zustand
- B: Ausgeklappter Zustand
- *α*: Haltewinkel

## Patentansprüche

1. Klappbettsystem (10) zum Einsatz in einem Fahrzeug, insbesondere einem Freizeitfahrzeug,
umfassend ein Klappbett (1) und ein Befestigungssystem, mit dem das Klappbett (1) an einer Wand des Fahrzeugs klappbar festlegbar ist, wobei das Klappbett (1) von einem hochgeklappten Zustand (A) in einen ausgeklappten Zustand (B) bringbar ist,
wobei das Befestigungssystem zumindest eine Haltestrebe (62) umfasst, welche an ihrem einen Ende an einem ersten Befestigungspunkt (64A) festlegbar ist, der im ausgeklappten Zustand oberhalb des Klappbetts (1) an der Wand des Fahrzeugs angeordnet ist und an ihrem anderen Ende an einem zweiten Befestigungspunkt (64B) an einer ersten Seite des Klappbetts befestigt ist, und
wobei im ausgeklappten Zustand (B) das Klappbett (1) an einer zweiten Seite (12) an der Wand formschlüssig festgelegt ist und durch die Haltestrebe (62) gehalten wird.

2. Klappbettsystem (10) nach Anspruch1,
wobei das Befestigungssystem so konfiguriert ist, dass die zweite Seite (12) beim Ausklappen des Klappbetts (1) von einer unteren Position, insbesondere an oder in der Nähe des Fahrzeugbodens, in eine obere Position überführbar ist, in der sie an der Wand formschlüssig festgelegt ist.

3. Klappbettsystem (10) nach einem der vorhergehenden Ansprüche, wobei das Befestigungssystem eine obere Verriegelungsvorrichtung (6) und/oder eine untere Verriegelungsvorrichtung (5) aufweist,
wobei die obere Verriegelungsvorrichtung (6) dazu konfiguriert ist, das Klappbett (1) im hochgeklappten Zustand (A) zu sichern und ein Ausklappen des Klappbettes (1) zu verhindern,
wobei die obere Verriegelungsvorrichtung (6) über ein Entsicherungselement lösbar ist, um das Ausklappen des Klappbetts (1) in den ausgeklappten Zustand (B) zu ermöglichen,
wobei die untere Verriegelungsvorrichtung (5) dazu konfiguriert ist, das Klappbett (1) in dem ausgeklappten Zustand (B) zu sichern und ein Überdrehung des Klappbetts (1) über die obere Position hinaus zu verhindern.

4. Klappbettsystem (10) nach einem der vorhergehenden Ansprüche, wobei das Klappbett (1) eine Liegefläche (2) und eine dieser gegenüberliegende Sichtfläche (4) aufweist,
wobei das Klappbett (1) in dem hochgeklappten Zustand (A) so ausgerichtet ist, dass sich die Sichtfläche (2) parallel zur Wand erstreckt und sichtbar ist, und/oder
wobei das Klappbett (1) in dem ausgeklappten Zustand (B) so ausrichtet ist, dass sich die Liegefläche (2) orthogonal zur Wand erstreckt und ein der zweiten Seite gegenüberliegendes distales Ende des Klappbetts (1) freitragend ist.

5. Klappbettsystem (10) nach einem der vorhergehenden Ansprüche, wobei die Haltestrebe (62) im ausgeklappten Zustand (B) auf Zug belastet wird und insbesondere durch ein steifes Element wie beispielsweise ein Metallband oder ein Metallprofil gebildet wird.

6. Klappbettsystem (10) nach einem der vorhergehenden Ansprüche, wobei der erste Befestigungspunkt (64A) und der zweite Befestigungspunkt (64B) so positioniert sind, dass sich die Haltestrebe (62) in dem ausgeklappten Zustand (B) in einem Haltewinkel (α) zwischen 20° und 60°, bevorzugt zwischen 35° und 50°, zu der Liegefläche (2) erstrecken.

7. Klappbettsystem (10) nach einem der vorhergehenden Ansprüche, wobei das Klappbettsystem (1) zwei Haltestreben (62) umfasst, wobei sich die beiden Haltestreben (62) parallel zueinander erstrecken.

8. Klappbettsystem (10) nach einem der vorhergehenden Ansprüche,
wobei das Befestigungssystem einen wandseitigen Befestigungsabschnitt (66) aufweist, der an der Wand festgelegt ist,
wobei das Klappbett (1) zumindest einen bettseitige Befestigungsabschnitt (14) aufweist, der an der zweiten Seite (12) festgelegt ist,
wobei der zumindest eine bettseitige Befestigungsabschnitt (14) ein Führungselement (16) umfasst, das insbesondere als Vorsprung (18) ausgebildet ist,
wobei der zumindest eine wandseitige Befestigungsabschnitt (66) als Führungsschiene (68) ausgebildet ist, die zumindest im Wesentlichen vertikal ausgerichtet ist,
wobei das Führungselement (16) dazu ausgelegt ist, in der Führungsschiene (68) zu gleiten und dadurch das Klappbett (1) schwenkbar und vertikal verschiebbar zu lagern.

9. Klappbettsystem (10) nach einem der vorhergehenden Ansprüche,
wobei der zumindest eine wandseitige Befestigungsabschnitt (66) am oberen Ende eine Einrastfunktion aufweist, die dazu ausgelegt ist, das Klappbett (1) im ausgeklappten Zustand (B) gegen eine axiale Verschiebung entlang der Vertikalachse (V) und/oder einer Verdrehung zu sichern.

10. Klappbettsystem (10) nach einem der vorhergehenden Ansprüche, wobei die Wand zwei sich gegenüberstehende Rahmenelemente (8A, 8B) umfasst,
wobei jeweils ein wandseitiger Befestigungsabschnitt (66) an den beiden Rahmenelementen (8A,8B) festgelegt ist,
wobei das Klappbettes (1) zwei gegenüberliegende bettseitige Befestigungsabschnitte (14) aufweist, die formschlüssig an den beiden wandseitigen Befestigungsabschnitten (66) zwischen den Rahmenelementen (8) festgelegt sind.

11. Klappbettsystem (10) nach einem der vorhergehenden Ansprüche,
wobei das Klappbett (1) dazu ausgelegt ist, als Einzelbett eingesetzt zu werden.

12. Fahrzeug umfassend ein Klappbettsystem (10) gemäß einem der Ansprüche 1 bis 11.

13. Fahrzeug nach Anspruch 12,
wobei das Klappbett (1) insbesondere oberhalb einer Dinette montiert ist und/oder wobei die Sichtfläche (4) des Klappbettes (1) im hochgeklappten Zustand (A) als Rückenlehne verwendbar ist.

14. Fahrzeug nach einem der vorhergehenden Ansprüche 11 bis 13,
wobei das Klappbett (1) sich im ausgeklappten Zustand (B) in Richtung des distalen Endes quer zur Fahrtrichtung erstreckt.

15. Fahrzeug nach einem der vorhergehenden Ansprüche 11 bis 14,
wobei unterhalb des Klappbetts (1) im ausgeklappten Zustand (B) ein weiteres Bett vorgesehen ist.
